# EUROPEAN PATENT SPECIFICATION

(11) **EP 0 617 430 B1**
(45) Date of publication and mention of the grant of the patent: **29.12.1997**
(21) Application number: 94104486.9
(22) Date of filing: 22.03.1994
(51) Int. Cl.: G21C 1/22

(54) **Plutonium annihilating nuclear reactor with use of liquid nuclear fuel**
Plutonium zerstörender Kernreaktor mit Verwertung flüssigen Kernbrennstoffes
Réacteur nucléaire comportant l'annihilation de plutonium, avec emploi de combustible nucléaire liquide

(30) Priority: 24.03.1993 JP 65216/93; 27.12.1993 JP 330825/93
(43) Date of publication of application: 28.09.1994
(73) Proprietor: Furukawa, Kazuo, Naka-gun, Kanagawa-ken (JP)
(72) Inventor: Furukawa, Kazuo, Naka-gun, Kanagawa-ken (JP); Mitachi, Koushi, Toyohashi-shi, Aichi-ken (JP)
(74) Representative: Walter, Helmut, Dipl.-Ing.

(56) References cited:
- FR-A- 2 344 930
- GB-A- 2 098 788
- US-A- 3 349 001
- NUCLEAR TECHNOLOGY, vol.27, no.3, November 1975, USA pages 411 - 415 SOOD ET AL. 'Plutonium trifluoride as a fuel for molten salt reactors-solubility studies'
- ATOMKERNENERGIE/KERNTECHNIK, vol.45, no.1, July 1984, MUNCHEN DE pages 45 - 49 V.M. NOVIKOV 'Molten salt advanced and emerging nuclear systems: flexible energy option'
- NUCLEAR FUSION, vol.18, no.7, July 1978, VIENNA AT pages 893 - 900 BLINKIN ET AL. 'Symbiotic system of a fusion and fission reactor with very simple fuel reprocessing'
- JOURNAL OF NUCLEAR SCIENCE AND TECHNOLOGY, vol.27, no.12, December 1990, JAPAN pages 1157 - 1178 FURUKAWA ET AL. 'Thorium molten-salt nuclear energy synergetics'

## Description

### Field of the Invention

The present invention relates to a method of using a nuclear fission reactor with use of liquid nuclear fuel composed of thorium and plutonium, the reactor having moderators arranged in a nuclear fission reactor core and wherein uranium ²³³U is generated from the thorium of fertile material in the nuclear fuel.

### Description of the Prior Art

The inventor already disclosed an invention of the nuclear fission reactor with use of liquid nuclear fuel in the Japanese Patent Application No. 60-272165. The small-sized molten-salt nuclear fission reactor (MSR) of the preceding invention needs no replacement of graphite of moderators nor continuous chemical process in a simple structure, operation, and maintenance. In the reactor, the plutonium of the nuclear fuel is made to nuclear-fission to energy and at the same time, the neutrons produced by the fission converts the thorium to uranium to continue the reaction.

Also, the inventor already disclosed another invention of the accelerator molten-salt breeder reactor (AMSB) of single fluid type in the Japanese Patent Publication No. 63-64754 (1511036), or GB 2098788 A. In this reactor, the target/blanket salt is a molten fluoride containing a great amount of ThF₄ as parent material and ²³³ UF₄ , ²³⁵ UF₄ , or ²³⁹ PuF₃ as nuclear fissionable material. The target/blanket salt has a proton beam of around 1 GeV (1,000 MeV) irradiated thereon, and neutrons generated by the irradiation are made to be absorbed in Th, thereby breeding ²³³ U. The reaction is started with ²³⁵UF₄ or ²³⁹PuF₃ and continued without adding fissile materials. From time to time salt is taken out from the reactor and replaced by the same amount of fresh salt, the fresh salt does not contain fissile materials. The extracted salt is purified and used in another, i.e. in a molten salt power reactor.

However, the plutonium obtained by reprocessing the waste nuclear warheads or used nuclear fuels has turned into a grave social and environmental problems currently.

In view of solving the foregoing problem of the prior arts, it is an object of the present invention to improve the methods of using reactors the previous (MSR) with a use of liquid nuclear fuel in order to effectively annihilating such a hazardous plutonium as nuclear fuel by way of changing the practice of fuel cycle and also changing the reactor construction a little as needed.

Briefly, this object is accomplished in accordance with aspects of the present invention by in a MSR with use of liquid nuclear fuel wherein the spaces of the moderators arranged in a MSR core are communicated with an uranium collecting unit, the generated ²³³ U is separated by the uranium collecting unit as needed, and plutonium Pu is added in place of the uranium ²³³ U, thereby enhancing burning. The uranium collecting unit comprises a drain tank and a fluorination unit. In the reactor, the salt containing the thorium Th and the plutonium Pu (nuclear fuel) is made to flow in the spaces of the core. The plutonium Pu of the nuclear fuel is made to nuclear-fission to generate energy. At the same time, the neutrons produced by the nuclear fission converts the thorium Th to uranium ²³³ U. The converted uranium ²³³ U is fluorinated in the uranium collecting unit before being separated as needed. Additional plutonium Pu is put in place of the uranium ²³³ U to enhance burning.

From Nuclear Technology, vol.27, no.3, November 1975, USA, pages 411-415 it is known to use PuF₃ as fuel for molten salt reactors, but the problem of the Pu in the nuclear waste is not solved therewith.

The fuel salt my be irradiated with a proton beam forming an AMSB power reactor wherein the salt containing ThF₄ as parent material and ²³³ UF₄ or ²³⁵ UF₄ , and ²³⁹ PuF₃ as nuclear fissionable materials, wherein the following concentrations are kept: (1) the ThF₄ is kept as high as 15 to 20 mol%, (2) the ²³³ UF₄ or the ²³⁵ UF₄ is kept less than 1 mol%, holding subcritical condition to producing more power generation than consuming power, the ²³³ UF₄ being increased and the increased ²³³ UF₄ being separated and (3) the ²³⁹ PuF₃ is kept as high as 0.4 to 0.8 mol%. In the reactor, the neutrons generated by the irradiation are made to be absorbed in Th, thereby breeding ²³³ U.

The concentrations of the ThF₄, the ²³³ UF₄ or the ²³⁵ UF₄, and the ²³⁹ PuF₃ of the target salt, may be as follows (1) that of the ThF₄ is kept as high as 15 to 20 mol%, (2) that of the ²³³ UF₄ or the ²³⁵ UF₄ is kept as low as 0.05 to 0.4 mol%, the ²³³ UF₄ being increased and the increased ²³³ UF₄ being separated, and (3) that of the ²³⁹ PuF₃ is kept as high as 0.4 to 0.8 mol%.

The use of an AMSB is thereby improved to a plutonium annihilating accelerator molten-salt breeder power reactor which uses ²³⁹ PuF₃ as nuclear fissionable material by way of efficiently producing valuable ²³³ U while effectively annihilating the annoying Pu. That is, the improved reactor is a high-gain accelerator molten-salt breeder reactor of single fluid type that can chemically process ²³³ UF₄ of the target/blanket salt to decrease its concentration as required and add new ²³⁹ PuF₃ to a higher concentration so that production of ²³³ U can be increased while ²³⁹ Pu can be effectively burnt. The improved reactor also aims to supply power sufficient to make it economic, if possible.

As transuranium elements, such as Np, Am, and Cm, other than the plutonium Pu behave like Pu, any of them can be added to the plutonium Pu to annihilate it. The foregoing and other objects, advantages, manner of operation and novel features of the present invention will be understood from the following detailed description when read in connection with the accompanying drawings.

### BRIEF DESCRIPTION OF THE DRAWINGS

In the accompanying drawings:
Fig. 1 depicts a longitudinal cross-sectional view illustrating a nuclear reactor (MSR) with use of liquid nuclear fuel in a first embodiment of the present invention;
Fig. 2 depicts a cross-sectional view taken across A-A in Fig. 1;
Fig. 3 depicts a view illustrating dimensions of zones in a core of the first embodiment;
Fig. 4 depicts a longitudinal cross-sectional view illustrating an accelerator molten-salt breeder power reactor (AMSB) in a fourth embodiment of the present invention; and
Fig. 5 depicts a block diagram illustrating a fuel cycle in the fourth embodiment.

### DETAILED DESCRIPTION OF THE PREFERRED EMBODIMENTS

### Embodiment 1

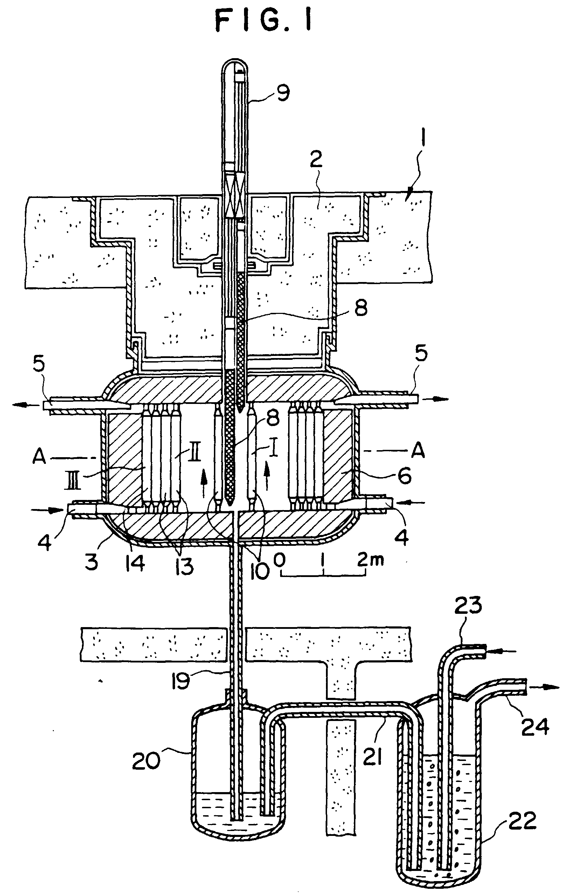

The following describes in detail a first embodiment according to the present invention by reference to the accompanying drawings. The embodiment shown in Fig. 1 is a 155 MWe electric power (350MW thermal output) MSR power reactor.

As shown in Fig. 1, the power reactor has a cylindrical, thin-contour reactor vessel 3 made of a Ni-Mo-Cr alloy located below thick wall covers 1 and 2 of concrete. Dimensions of the above- mentioned units can be seen as compared with a 2 m scale in the figure. Reactor vessel 3 has two salt inlets 4 located at a bottom thereof and two salt outlets 5 at a top thereof.

The salt is composed of ⁷ LiF-BeF₂ -ThF₄ - ²³⁹ PuF₃ . Molar percents of ⁷ LiF, BeF₂ , ThF₄ , and ²³⁹ PuF₃ are 71.7, 16, 12, and 0.3, respectively.

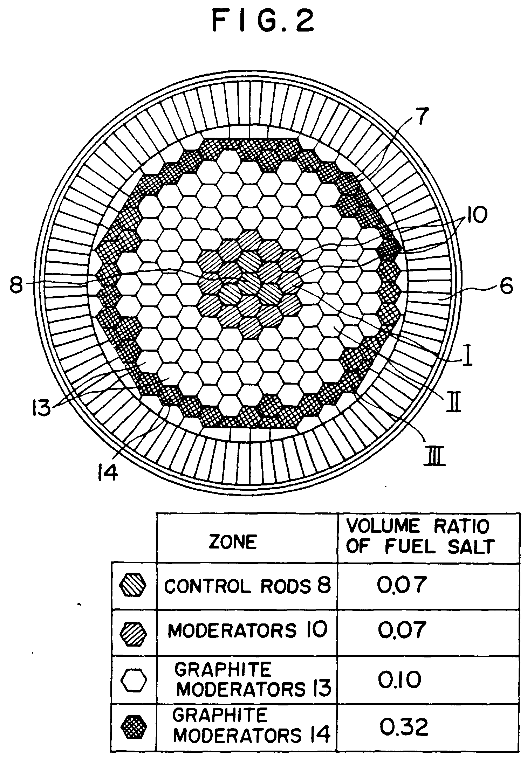

Reactor vessel 3 also has a graphite reflector 6 thereinside as shown. Reactor vessel 3 further has control rods 8 of graphite inserted movable up and down in a center zone I in a core 7 thereof by a drive mechanism 9. In zone I are arranged fixed graphite moderators 10 as shown in Figs. 1 and 2. Moderators 10 are around 2 m long and have a top and bottom supporting fixtures each.

Each of moderators 10 in center zone I is formed hexagonal of six long, narrow rhombus plates to have a certain space provided thereamong by projections or the like. A porosity of moderator 10 is 6 to 8 %, preferably 7 %, and a volume ratio of the graphite is 92 to 94%, preferably 93%. There are also arranged graphite moderators 13 in a surrounding zone II outside center zone I. Moderators 13 are indicated white in Fig. 2. A porosity of moderator 13 is 8 to 12 %, preferably 10 %, and a volume ratio of the graphite is 88 to 92 %, preferably 90 %.

There are further arranged similar graphite moderators 14 of 30 to 50 cm thick in total in a blanket zone III outside surrounding zone II. Each of moderators 14 is formed hexagonal of nine long, narrow rhombus plates to have a certain space provided thereamong by projections or the like. A porosity of moderator 14 is 30 to 34 %, preferably 32 %, and a volume ratio of the graphite is 66 to 70 %, preferably 68 %.

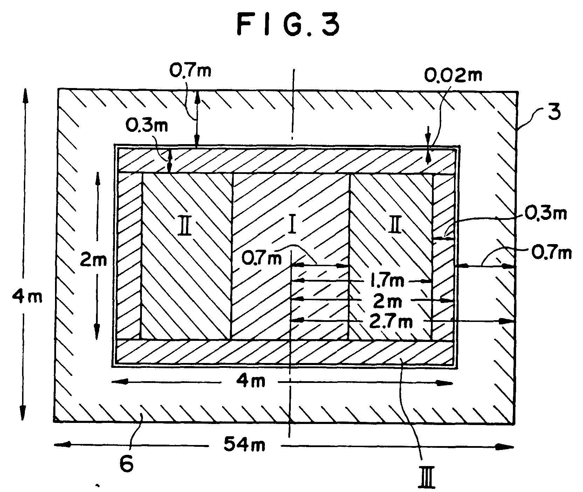

Fig. 3 shows dimensions of a graphite reflector 6 in reactor vessel 3 and those of zone I, zone II, and zone III in core 7.

Reactor vessel 3 should be filled with graphite moderators 10, 13, and 14 before being sealed by welding. This means that the movable part is only drive mechanism 9 for control rods 8 in the center of reactor vessel 3. Total amount of fuel salt including the one outside the core is 12. 1 m³ , or 40.5 tons. This includes ²³⁹ Pu of 530 kg and Th of 1.75 tons. A center of core 7 is communicated via a pipe 19 with a lower portion of a drain tank 20 below. In turn, the lower portion of drain tank 20 is communicated a pipe line 21 with a fluorination unit 22. The lower portion of fluorination unit 22, also, is connected with a feed pipe 23 for supplying helium and fluorine thereinto. Fluorination unit 22 has an outlet 24 provided on a top thereof for the helium, fluorine gas, and UF₆.

The following describes operation of the power reactor.

The salt composed of chemically stable, normal pressure molten fluoride of ⁷ LiF-BeF₂ -ThF₄ - ²³⁹ PuF₃ is made to enter from inlets 4 to core 7. The salt is made to pass through spaces 12 and 16 of moderators 10, 13, and 14 upward to flow out of outlets 5. If any of the control rods 8 is put into the zone I of core 7 by drive mechanism 9, absorption of neutrons is decreased. As a result, density of the neutrons is increased so that nuclear reaction can be enhanced on the contrary to that of the conventional nuclear reactors.

In the nuclear reaction, plutonium ²³⁹ Pu is nuclear-fissioned to generate energy and neutrons. Parts of the neutrons are absorbed into 232 Th, which is converted to uranium ²³³U . Its conversion ratio is about 90 %. As in the operation, rare gas elements, including Kr and Xe, generated by the nuclear fission will not dissolve into the salt, around 99 % of them are separated from the cover gas and put out to the reactor.

The fuel used in the reactor is supplied by adding ⁷ LiF- ²³⁹ PuF₃ salt to a salt tank as needed. In supplying the fuel, contaminated fuel salt should be removed a little to keep constant a constant volume of the tank.

On the other hand, the high-temperature fuel salt fed out of the reactor is made to flow through two salt loop pipes. A first heat exchanger conducts heat of the fuel salt to a molten salt of NaBF₄ -NaF of 92 to 8 in molar percents of a secondary system. In turn, a second heat exchanger conducts heat of the salt to water to produce water vapor. The water vapor revolves a turbine to generate electricity. Efficiency of the energy available is around 43% in a post-critical condition.

Uranium ²³³ U produced by absorption of the parts of the generated neutrons into Th should be subjected to fluorination by drain tank 20 and fluorination unit 22 every one to two years. This is to separate uranium ²³³ U from the fuel salt to collect. The collected uranium ²³³ U can he used as fuel for other ordinary molten salt power reactor.

The processed fuel is returned to the original reactor. The reactor has Pu or the like added to the fuel before being restarted, thereby using up Pu and producing ²³³ U.

In separating ²³³ U, we also can separate parts of the materials produced by the nuclear fission and reaction in any of a distillation method, oxidation-sedimentation method, liquid-metal contact extraction method as well as the above-mentioned fluorination method. This can increase efficiency of use of neutrons and prevent corrosion. Separation ratios of the materials depend on economy of the entire nuclear power plant system.

An initial supply amount of ²³⁹ Pu was around 530 kg. When it had been added with Th of 146 kg per year and Pu of 26 kg per year, Pu of 250 kg was burnt in two years.

After the two years, the burnt salt was moved to a process tank. Into the process tank was sprayed a mixed gas of fluorine and helium. As a result, ²³³ U of around 170 kg was separated as UF₆ gas.

The salt was returned to the reactor again and had Pu of around 220 kg added thereto before the reactor was restarted.

For around 20 years, the reactor was able to annihilate Pu of around 2.3 tons and produce ²³³ U of around 1.5 tons.

### Embodiment 2

In order to annihilate from the used fuel out of a light-water reactor Pu, including ²³⁹ Pu, 240 Pu, 241 Pu, and 242 Pu in ratio of 56.5 to 25.3 to 13.2 to 5.0, a small-type molten salt power reactor (MSR) of 100 MW electric power (250 MW thermal output) was used to use a fuel salt composed of ⁷ LiF-BeF ₂ , -ThF₄ -PuF₃ . Molar percents of ⁷ LiF, BeF₂ ThF₄ , and ²³⁹ PuF₃ are 71.81, 16, 12, and 0.19, respectively.

Dimensions of the reactor are arround 6m diameter and 5m height. Dimensions of the core and blanket area are arround 4.6m diameter and 3.7m height.

An output density of the reactor was around 4 kW th/liter in average.

An initial supply amount of Pu was around 390 kg. When it had been added with Pu of around 320 kg and Th of 220 kg in operation for 1,000 days, Pu of around 240 kg was burnt.

After the 1,000 days, the burnt salt was moved to a process tank before being fluorinated. As a result, ²³³ U of around 190 kg was separated as UF₆. After that, the salt was returned to the reactor again and had Pu of around 280 kg added thereto before the reactor was restarted.

For around 20 years, the reactor was able to annihilate Pu of around 1.7 tons and produce ²³³ U of around 1.4 tons. As described so far, the nuclear reactor of the present invention provides the following effects.
(1) The reactor can burn much more Pu. The ²³³ U produced from Th can be separated as needed so that ²³³ U can be kept 10 % less than Pu in average amount. This means that a burning ratio of Pu to the whole nuclear fissionable materials can be made as high as around 85 to some 95 %.
(2) In order to use not only Pu itself as fuel to burn, but also its neutrons generated by the nuclear fission, ²³³ U is produced from Th, but not left in the reactor too much. This means that amount of burning ²³³ U is little and most of it can be collected for use in other reactors. As the conversion ratio of the reactor of the present invention is as high as around 0.8, the amount of Pu consumed can be converted to virtually the same of ²³³ U (70 to 90 %).
(3) In addition, the reactor can generate electricity. The feature of power generation cannot be interrupted too much as an interval of separation works of ²³³ U can be made longer than one year or every three to five years as the case may be. Also, a bypass circuit can be used to continuously carry on the separation while the reactor is in operation.
(4) Change of reaction is not too much as most of the nuclear fissionable materials consumed in operation is regenerated as ²³³ U. That is, operation and maintenance are made easily.

### Embodiment 3

In embodiment 2, each values are change as follows for improving ²³³ U production and thermal output density.

Dimensions of the reactor are arround 5.4m diameter and 4.8m height. Dimensions of the core and blanket area are arround 3.8m diameter and 3.2m height. Molar percents of ²³⁹ PuF₃ at initial is 0.21, An initial supply amount of Pu was around 319 kg. When it had been added with Pu of around 319 kg in operation for 1,000 days, Pu of around 197 kg was burnt. ²³³ U production during the period is arround 242 kg.

For around 20 years, the reactor was able to annihilate Pu of around 1.44 tons and produce ²³³ U of around 1.77 tons.

### Embodiment 4

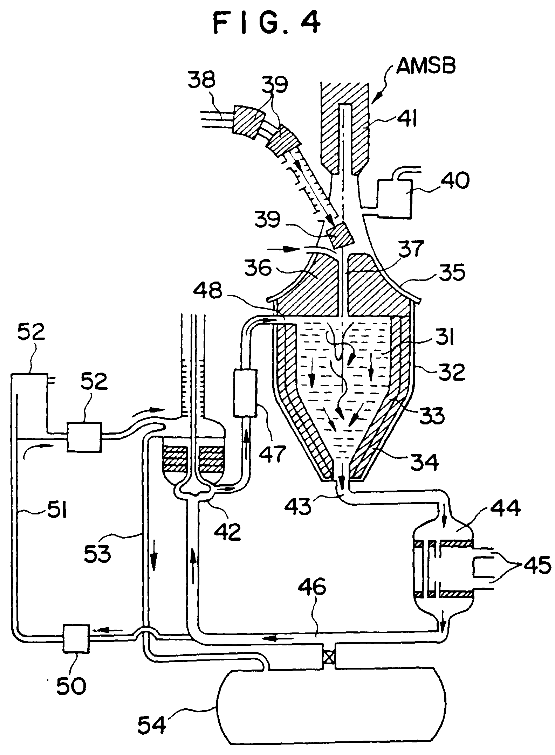

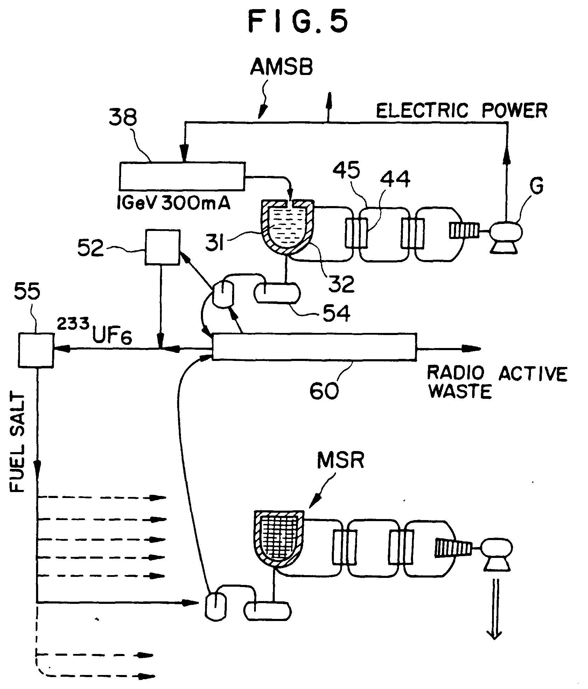

The following describes in detail a fourth embodiment according to the present invention by reference to Figs. 4 and 5. The fourth embodiment is a breeder power reactor for use with an accelerator for breeding ²³³ U. In the figures, the target/blanket salt used is a mixed molten metal salt composed of ⁷ LiF-BeF₂ -ThF₄ - ²³³ UF₄ - ²³⁹ PuF₃ . Concentrations of ⁷ LiF, BeF₂ , ThF₄ , ²³³ UF₄ , and ²³⁹ PuF₃ are 64, 18, 17.2, 0.1, and 0.7 in molar percents, respectively. Total amount of the salt is around 100 m³ .

Target salt 31 is fed to a reacting unit 32 made of Ni alloy of an AMSB (Accelerator Molten-Salt Breeder) shown in Fig. 4. Inverted cone-shaped reacting unit 32 has a graphite reflector 33 and a graphite cover 34 stuck doubly to an inside thereof. A top cover 35 has also a graphite cover 36 stuck an inside thereof. A center of top cover 35 has a through-hole 37 to pass a proton beam 38. Proton beam 38 is bent by three deflecting magnets 39 to irradiate target salt 31. In Fig. 4 also are indicated a steam trap 40 and a neutron stopper 41.

In operation, target salt 31 is made to voltex in reacting unit 32. The voltex has the proton beam 38 coming in around its eccentric center. The neutrons produced by incident proton beam 38 fissions nucleuses of ²³⁹ Pu which is added at a very high concentration to burn. The fission serves also for multiplying number of neutrons. Parts of ²³⁹ Pu are annihilated also by proton spallation reaction.

Most of the generated neutrons are absorbed by Th to produce ²³³ U. As the produced ²³³ U is immediately separated to keep at a low concentration, it is not annihilated too much by nuclear fission. Thus, production of the separated ²³³ U can be increased.

In the course of nuclear reaction process, a great amount of heat is generated, particularly by the nuclear fission. The heat is used to generate electric power.

In more detail, target salt 31 is fed out of an outlet 43 at a bottom of reacting unit 32 by a main pump 42. Then, target salt 31 is heat-exchanged with a secondary fluid 45 by a heat exchanger 44. Target salt 31 then is made to pass through a primary pipe 46 before being returned to an inlet 48 at an upper portion of reacting unit 32 via a flow adjusting valve 47. In the course, heated secondary fluid 45 is used for a generator G in Fig. 5 to generate electric power. Parts of target salt 31 are branched to a bypass system 51 by a pump 50 as needed. They then are subjected to fluorination by a chemical processing system 52 shown on the left side of Fig. 5 to separate. The fluorination and distillation in chemical processing system 52 can separate ²³³ UF₆ gas from target salt 31, thereby keeping ²³³ U at a low concentration. In this process, excess target salt 31 is returned to a tank 54 through an overflow pipe 53. The ²³³ UF₆ gas separated by chemical processing system 52 is immediately let to a fuel salt tank 55 in which it is reduced to and dissolved as ²³³ U. The fuel salt processed as described above is transported as fuel for use in molten-salt nuclear fission power reactors shown in Fig. 5. (See the Japanese Patent Application No. 60-272165.)

Also, the whole amount of target salt 31 is purified by a batch processing plant 60 as needed. It is enough that the process by a fuel salt tank 55 or batch processing plant 60 is made at a speed that the whole amount is processed around two times per year. The reason is that change of concentration of the nuclear fissionable materials can be restricted below 10 %. At the same time, the annihilated gases, such as tritium, can be separated as needed. As ThF₄ , PuF₃ , and similar compounds are gradually decreased, they are added a eutectic salts with ⁷ LiF as needed to keep the above-mentioned composition. Similarly, the ²³³ UF₆ separated by batch processing plant 60 is led to fuel salt tank 55.

If the nuclear reactor of the present invention has proton beam 38 of 1 GeV and 300 mA, for example, the amount of Pu burnt and annihilated is around 310 kg per year. Production of ²³³ U is 730 kg per year. As capacity of the reactor system for ²³³ U is around 750 kg, it is doubled in around 1.03 years. This means the breeder reactor is highly effective.

### Embodiment 5

In said embodiment 4, concentrations of ⁷ LiF, BeF₂ , ThF₄ , ²³³ UF₄ , and ²³⁹ PuF₃ are changed to 64, 18, 16.9, 0.4, and 0.7 in molar percents, respectively from 64, 18, 17.2, 0.1, and 0.7 in molar percents. Total amount of Pu burnt and annihilated is around 385 kg per year. Production of ²³³ U is 785 kg per year. It is doubled in around 3.8 years.

### Embodiment 6

In said embodiment 4, concentrations of ⁷ LiF, BeF₂ , ThF₄ , ²³³ UF₄ , and ²³⁹ PuF₃ are changed to 64, 18, 16.7, 0.6, and 0.7 in molar percents, respectively from 64, 18, 17.2, 0.1, and 0.7 in molar percents. Total amount of Pu burnt and annihilated is around 470 kg per year. Production of ²³³ U is 840 kg per year. It is doubled in around 3.6 years.

Economy of the nuclear reactor of the present invention can be estimated as follows. Power generation is around 800 or 1200 MWe in the embodiment 5 or embodiment 6, respectively, though it is not precise and will produce much more nuclear reaction products. Of all, about 600 MWe is consumed in the reactor system itself and the remaining 200 and 6000 MWe can be sold. If the power price is 10 yen per kWhr, especially in later, the total amount of sales is 44 billion yen per year. This greatly surpasses all the costs of 20 to 30 billion yen per year.

As described so far, in this invention, the nuclear reactor of the present invention cannot only feed the electric power needed for the reactor facility itself, but also externally supply it enough to meet the costs of facility construction, operation, and maintenance.

Also, the reactor facility itself can serve as power plant. However, its principal purpose is not in power generation, but in production of ²³³ U fuel to utilize the Th nuclear energy resource.

Further, the nuclear reactor of the present invention is simple in the structure.

Still further, the nuclear reactor of the present invention can efficiently produce valuable ²³³ U while effectively annihilating Pu involving many difficult social and environmental problems.

Still further, the nuclear reactor of the present invention can produce ²³³ U while bringing profits by selling electric power, whereas the usual accelerator breeder reactors highly cost to yield it.

## Claims

1. Method of using a nuclear fission reactor with a liquid nuclear fuel composed of thorium Th and plutonium Pu, the reactor having moderators (10,13,33) arranged in a nuclear fission reactor core (7) and wherein uranium ²³³U is generated from the thorium Th, filling the spaces between the moderators (10,13,33) with the nuclear fuel, characterized in separating the generated ²³³U by a uranium collecting unit (20,22,52) communicated with the spaces of the moderators and adding plutonium Pu for enhancing burning.

2. Method according to claim 1, wherein the separated uranium is collected in a drain tank (20,54) and fluorinated in a fluorination unit (22,52).

3. Method according to claim 1 or 2, wherein the liquid nuclear fuel is composed of molten fluorides, ThF₄ as parent material and ²³³UF₄ or ²³⁵UF₄ and ²³⁹PuF₃ as nuclear fissionable materials, the liquid nuclear fuel forming a target salt and being irradiated with a proton beam (38), further for annihilating the plutonium the target salt being kept with the following concentrations of the parent and fissionable materials:
a) the ThF₄ is kept as high as 15 to 20 mol%,
b) the ²³³UF₄ or ²³⁵UF₄ is kept less than 1 mol%, holding a subcritical condition to generate more power than consuming power increasing the ²³³UF₄, the increased ²³³UF₄ being separated and
c) the ²³⁹PuF₃ is kept as high as 0.4 to 0.8 mol%.

4. Method according to claim 3, wherein in the target salt
a) the ThF₄ is kept as high as 15 to 20 mol%,
b) the ²³³UF₄ or the ²³⁵UF₄ is kept as low as 0.05 to 0.4 mol% and
c) the ²³⁹PuF₃ is kept as high as 0.4 to 0.8 mol%.

5. Method according to any of the claims 1-4 wherein any of the transuranium elements, such as Np, Am and Cm, other than the plutonium Pu is added to the plutonium Pu for annihilating the transuranium elements.

## Patentansprüche

1. Verfahren für den Einsatz eines Kernspaltungsreaktors mit einem aus Thorium Th und Plutonium Pu gebildeten flüssigen Kernbrennstoff, wobei der Reaktor Moderatoren (10, 13, 33) in deren Anordnung in einem Reaktorkern (7) aufweist, ²³³U aus dem Thorium Th gewonnen wird und die Zwischenräume zwischen den Moderatoren (10, 13, 33) mit dem Kernbrennstoff gefüllt sind,
**gekennzeichnet durch** Trennen des erzeugten ²³³U mittels einer mit den Zwischenräumen zwischen den Moderatoren verbundenen Urankollektoreinheit (20, 22, 52) und Förderung des Brennvorganges durch Hinzufügen von Plutonium Pu.

2. Verfahren nach Anspruch 1, bei dem das abgetrennte Uran in einem Drainagetank (20, 54) gesammelt und in einer Fluoridationseinheit (22, 52) fluoriert wird.

3. Verfahren nach den Ansprüchen 1 oder 2, bei dem der flüssige Kernbrennstoff aus gechmolzenen Fluoriden, ThF₄ als Ausgangsmaterial und ²³³UF₄ oder ²³⁵UF₄ sowie ²³⁹PuF₃ als kernspaltbarem Material gebildet ist,
wobei der flüssige Kernbrennstoff ein Targetsalz bildet und mit einem Protonenstrahl (38) bestrahlt wird und wobei weiter zur Annihilation des Plutoniums das Targetsalz in der folgenden Konzentration von Ausgangsmaterial und kernspaltbarem Material zum Einsatz kommt:
(a) ThF₄ im Bereich von 15 bis 20 mol%,
(b) ²³³UF₄ oder ²³⁵UF₄ unter 1 mol% bei unterkritischer Bedingung, um mehr Leistung zu erzeugen als zu verbrauchen und den ²³³UF₄-Anteil zu erhöhen, der abgetrennt wird und
(c) ²³⁹PuF₃ bei 0,4 bis 0,8 mol%

4. Verfahren nach Anspruch 3, wobei im Targetsalz enthalten sind
(a) ThF₄ 15 bis 20 mol%,
(b) ²³³UF₄ oder ²³⁵UF₄ unter 0,05 bis 0,4 mol% und
(c) ²³⁹ PuF₃ 0,4 bis 0,8 mol%.

5. Verfahren nach einem beliebigen der Ansprüche 1 bis 4, bei dem ein beliebiges der transuranen Elemente, wie Np, Am und Cm, außer Plutonium Pu zur Annihilation der transuranen Elemente zugegeben wird.

## Revendications

1. Procédé pour l'utilisation d'un réacteur de fission nucléaire avec un combustible nucléaire liquide composé de thorium Th et de Plutonium Pu, le réacteur comprenant des modérateurs (10, 13, 33) disposés dans un noyau de réacteur (7), de l'uranium ²³³U étant obtenu à partir du thorium Th et les intervalles entre les modérateurs (10, 13, 33) étant remplis du combustible nucléaire, **caractérisé par** la séparation du ²³³U ainsi produit à l'aide d'une unité collectrice d'uranium (20, 22, 52) communiquant avec les intervalles entre les modérateurs, et par l'activation de la combustion par addition de plutonium Pu.

2. Procédé suivant la revendication 1 dans lequel l'uranium séparé est accumulé dans une cuve de drainage (20, 54) et fluoré dans une unité de fluorisation (22, 52).

3. Procédé suivant l'une des revendications 1 ou 2 dans lequel le combustible nucléaire liquide se compose de fluorures fondus, soit ThF₄ comme matériau de base, et ²³³UF₄ ou ²³⁵UF₄ ainsi ²³⁹PuF₃ comme matériaux fissiles, le combustible nucléaire liquide produisant un sel cible et étant irradié par un rayon de protons (38), et, de plus, pour l'annihilation du plutonium, le sel cible étant utilisé dans les concentrations suivantes de matériau de base et de matériaux fissiles:
(a) ThF₄ entre 15 et 20 mol%,
(b) ²³³UF₄ ou ²³⁵UF₄ sous 1 mol% en cas de condition sous-critique pour produire plus de puissance que d'en consommer et augmenter la part ²³³UF₄ qui est séparée, et
(c) ²³⁹PuF₃ entre 0,4 et 0,8 mol%.

4. Procédé suivant la revendication 3, le sel cible contenant:
(a) ThF₄ entre 15 et 20 mol%,
(b) ²³³UF₄ ou ²³⁵UF₄ moins de 0,05 jusqu'à 0,4 mol% et
(c) ²³⁹PuF₃ entre 0,4 et 0,8 mol%.

5. Procédé suivant l'une quelconque des revendications 1 à 4 dans lequel l'un quelconque des éléments transuraniens, tels que Np, Am et Cm, sauf le plutonium Pu, est ajouté pour dématérialiser les éléments transuraniens.
